# EUROPÄISCHE PATENTANMELDUNG

(11) **EP 2 564 679 A1**
(43) Veröffentlichungstag der Anmeldung: **06.03.2013**
(21) Anmeldenummer: 11179295.8
(22) Anmeldetag: 30.08.2011
(51) Int. Cl.: A01B 49/02, A01B 73/00

(54) **Gezogene landwirtschaftliche Maschine mit Packereinheit**

(71) Anmelder: Horsch Maschinen GmbH, 92421 Schwandorf (DE)
(72) Erfinder: Horsch, Michael, 92421 Schwandorf (DE)
(74) Vertreter: Benninger, Johannes

(57) **Zusammenfassung**

Die vorliegende Erfindung betrifft eine gezogene landwirtschaftliche Maschine (10) zur Bodenbearbeitung und/oder zum Ausbringen von Saatgut. Die Maschine (10) weist ein Fahrwerk (20), Bodenbearbeitungswerkzeuge (14) und eine Packereinheit (16) auf, die mit dem Fahrwerk (20) gekoppelt ist und mit diesem eine bauliche und/oder funktionale Einheit bildet. In einer ersten Betriebslage ist das Fahrwerk (20) in eine aktive Lage für eine Straßenfahrt gebracht, während die Packereinheit (16) außerhalb eines Eingriffsbereichs mit dem Boden gebracht ist. In einer zweiten Betriebslage sind zumindest Teile des Fahrwerks (20) in eine inaktive Lage außerhalb eines Kontaktbereichs mit dem Boden gebracht, während die Packereinheit (16) sich in einem aktiven Zustand im Eingriffsbereich mit dem Boden befindet.

## Beschreibung

Die vorliegende Erfindung betrifft eine gezogene landwirtschaftliche Maschine zur Bodenbearbeitung und/oder zum Ausbringen von Saatgut, die ein Fahrwerk, Bodenbearbeitungswerkzeuge und eine Packereinheit umfasst, die mit dem Fahrwerk gekoppelt ist und mit diesem eine bauliche und/oder funktionelle Einheit bildet.

In der Landwirtschaft wird eine Vielzahl von verschiedenen Bodenbearbeitungsgeräten eingesetzt. Eine häufig verwendete Bauart umfasst einen angehängten Rahmen mit eigenem Fahrwerk und großer Arbeitsbreite, der mittels einer Zugmaschine über den Acker gezogen wird. Solche Bodenbearbeitungsgeräte können bspw. mit Lockerungs- und/oder Schneidwerkzeugen, bspw. als sog. Kurzscheiben- oder Zinkeneggen o. dgl. ausgebildet sein. Derartige Bodenbearbeitungsgeräte können zudem mit Säkombinationen und/oder Düngerstreueinrichtungen ausgestattet sein.

Zum Transport können bspw. Teile des Rahmens um horizontale Längsachsen verschwenkt werden, so dass die Baubreite der Maschine auf ein für die Straßenfahrt zulässiges Maß reduziert werden kann. Bei gezogenen landwirtschaftlichen Geräten zur Bodenbearbeitung oder Saat mit integrierten Packelementen gibt es verschiedene Varianten von Fahrwerken für diese Geräte, die für eine Straßenfahrt oder auch teilweise für den Wendevorgang im Feld notwendig sind. So gibt es Geräte, bei denen das Packerelement so ausgeführt ist, dass dieses Packerelement gleichzeitig auch als Fahrwerkselement genutzt werden kann. 1.d.R. sind solche Arten von Packerelementen aus Reifen gebildet, die sich gleichermaßen für eine Feldfahrt wie auch für einen Straßentransport eignen.

Sofern jedoch die Packerelemente aus Stahl oder anderen, nicht für die Straßenfahrt tauglichen Materialien bestehen, ist ein zusätzliches Fahrwerk notwendig, meistens bestehend aus einer Achse mit Rädern, versehen mit einer Hubeinrichtung, um das Gerät von der Arbeitsstellung in die Transportstellung oder umgekehrt zu bringen. Solche Fahrwerke und die Packer können dabei in unterschiedlichster Weise innerhalb der Gerätekombinationen angeordnet sein. So können bspw. Fahrwerke in der Gerätemitte, am Ende des Geräts, vor oder hinter den Packern angeordnet sein. In aller Regel sind die Fahrwerke und die Packer funktional voneinander getrennt und bedürfen jeweils eigener Rahmenbauteile und Aushubvorrichtungen. Diese herkömmlichen Anordnungs- und Bauarten bedürfen eines hohen technischen Aufwandes und benötigen zudem relativ viel Bauraum. So bauen bekannte gezogene landwirtschaftliche Geräte mit voneinander getrennten, eigenen Fahrwerken und Packerelementen i.d.R. in Längsrichtung sehr lang durch die Aneinanderreihung der verschiedenen Elemente und den Bauraum, der bspw. für die vertikale Bewegung der Fahrwerke oder auch Packerelemente notwendig ist.

Gleichzeitig werden Geräte immer größer und damit schwerer, wodurch es immer aufwändiger wird, bei diesen langen und schweren Geräten die Stabilität, beispielsweise der Rahmenkonstruktionen zu gewährleisten. Weiterhin sind Geräte mit zunehmender Länge und Größe fahrtechnisch immer instabiler als vergleichbar kürzere und kleinere Geräte. Dabei stellt die zunehmende seitliche Kippgefahr im Straßenverkehr eine zu bewältigende Herausforderung dar.

Die WO 2005/015974 A2 offenbart eine gezogene landwirtschaftliche Bodenbearbeitungsmaschine, die ein höhenverstellbares Fahrwerk mit einer Hubeinrichtung aufweist, so dass hintere Stützräder für eine Straßenfahrt aus einer ausgehobenen Ruhelage nach unten verschwenkt und in eine Betriebslage gebracht werden können, in der sie das Gerät tragen. Getrennt davon können scheibenförmige Bodenbearbeitungswerkzeuge mitsamt ihren Tragrahmenelementen aus einer nach unten geschwenkten Betriebslage für die Feldfahrt in eine nach oben verschwenkte Ruhelage für die Straßenfahrt gebracht werden. Die Schwenkmechanismen für die Tragräder und für die Bodenbearbeitungswerkzeuge sind unabhängig voneinander betätigbar.

Die US 7 073 604 B1 offenbart eine gezogene landwirtschaftliche Bodenbearbeitungsmaschine mit sehr großer Arbeitsbreite, die eine Mehrzahl von höhenverstellbaren vorderen Stützrädern sowie zwei Paare von höhenverstellbaren hinteren Stützrädern aufweist. Ein Tragrahmen der Maschine umfasst mehrere gelenkig miteinander verbundene Abschnitte, die bei der Überfahrt von unterschiedlich profilierten Bodenoberflächen gegeneinander verschwenkt werden können. Unmittelbar vor den hinteren Stützrädern sind scheibenförmige Packerräder angeordnet, die sich über die gesamte Arbeitsbreite der Bodenbearbeitungsmaschine erstrecken.

Ein Ziel der vorliegenden Erfindung besteht darin, eine Fahrwerk-Packeranordnung derart zu gestalten, dass auch große Geräte sehr kompakt bleiben können und dadurch die Fahrstabilität gewährleistet bleibt. Darüber hinaus soll eine optimale Stabilität der Rahmenkonstruktionen mit möglichst geringem Aufwand und Gewicht realisierbar sein.

Dieses Ziel der Erfindung wird mit dem Gegenstand des unabhängigen Patentanspruchs erreicht. Merkmale vorteilhafter Weiterbildungen der Erfindung ergeben sich aus den abhängigen Ansprüchen. So schlägt die Erfindung zur Erreichung des genannten Ziels eine Anordnung und eine funktionale Verbindung des Fahrwerkes mit einer Packereinheit bzw. einem Packerelement vor, die äußerst kompakt ist und dadurch die Baulänge bisher üblicher Anordnungen deutlich reduzieren kann. Gleichzeitig wird durch die erfindungsgemäße Fahrwerks-Packer-Kombination die Anzahl der Bauteile stark reduziert, was sich äußerst positiv auf die Kosten, auf die erzielbare Fahrstabilität und auf die gesamte mechanische und fahrdynamische Stabilität der Maschine in ihrer Arbeitsposition auswirkt.

Die Erfindung schlägt eine gezogene landwirtschaftliche Maschine zur Bodenbearbeitung und/oder zum Ausbringen von Saatgut und/oder anderem granulatartigem oder flüssigem Gut wie bspw. Dünger vor. Diese Maschine umfasst als wesentliche Funktionselemente ein Fahrwerk, Bodenbearbeitungswerkzeuge und eine Packereinheit, die mit dem Fahrwerk gekoppelt ist und mit diesem eine bauliche und/oder funktionale Einheit bildet. Normalerweise umfasst die Maschine darüber hinaus auch einen Tragrahmen, der die genannten Bauteile trägt bzw. miteinander verbindet und der über eine Zugdeichsel oder eine andere geeignete Verbindung mit einem landwirtschaftlichen Zugfahrzeug verbunden sein kann. Die Maschine ist erfindungsgemäß dadurch gekennzeichnet, dass in einer ersten Betriebslage das Fahrwerk in eine aktive Lage für eine Straßenfahrt gebracht ist und die Packereinheit außerhalb eines Eingriffsbereichs mit dem Boden gebracht ist, und dass in einer zweiten Betriebslage das Fahrwerk oder zumindest Teile des Fahrwerks in eine inaktive Lage außerhalb eines Kontaktbereichs mit dem Boden gebracht ist/sind und die Packereinheit sich in einem aktiven Zustand im Eingriffsbereichs mit dem Boden befindet. D.h., die beiden Funktionselemente Fahrwerk und Packereinheit sind derart miteinander gekoppelt bzw. baulich und/oder funktional miteinander verbunden, dass sie im Zusammenhang mit der Umschaltung zwischen Feldfahrt und Straßenfahrt miteinander bzw. gleichzeitig zwischen ihren Betriebslagen bzw. Endlagen bewegt oder aktiviert bzw. deaktiviert werden.

Das Fahrwerk und die Packereinheit bilden idealerweise eine äußerst kompakte Funktionseinheit mit einer gemeinsamen oder zumindest funktional und/oder baulich zusammenhängenden Schwenk- oder Bewegungsachse, um die das Fahrwerk und die Packereinheit zwischen ihrer ersten Betriebslage für eine Straßenfahrt und ihrer zweiten Betriebslage für eine Feldfahrt verschwenkbar sind. Die Funktionselemente Packereinheit und Fahrwerk können bspw. für sich an einer - ggf. gemeinsamen - Achse drehbar gelagert sein, und zwar derart, dass durch Verschwenken dieser Funktionseinheit um diese Achse entweder das Fahrwerk oder des Packerelement sich auf dem Untergrund abstützt. So kann die kombinierte Funktionseinheit aus Fahrwerk und Packereinheit bspw. eine horizontale, an einem Geräterahmen gelagerte und quer zur Fahrtrichtung ausgerichtete Schwenkachse sowie daran angeordnete Auslegerarme für das Fahrwerk bzw. die Packereinheit aufweisen, wobei die bauliche Einheit aus Schwenkachse und Auslegerarmen für sich starr ausgebildet ist. Wenn in diesem Zusammenhang von horizontalen Schwenkachsen für die Funktionseinheit die Rede ist, so ist damit nicht zwingend eine körperlich vorhandene Achse oder drehbare Welle o. dgl. gemeint. Die Achse kann auch eine virtuelle Schwenkachse sein, um welche die kombinierte Funktionseinheit aus Fahrwerk und Packereinheit beweglich angeordnet sein kann.

Zweckmäßigerweise sind den ersten und zweiten Betriebslagen der erfindungsgemäßen Maschine jeweils verriegelbare Endlagen des Schwenkbereichs der Schwenkachse mit daran angeordneten Auslegerarmen für das Fahrwerk und die Packereinheit zugeordnet. Die Definition der solcherart verriegelbaren Endlagen schließt jedoch eine Höhenverstellbarkeit und/oder eine federnde und/oder dämpfende Nachgiebigkeit der Fahrwerksräder und/oder Packerelemente nicht aus. Zu diesem Zweck können die Funktionsbauteile jeweils geeignete Feder- und/oder Dämpferelemente aufweisen, die sich sinnvollerweise am Aufbaurahmen bzw. Tragrahmen der Maschine abstützen. Eine Ausführungsvariante der erfindungsgemäßen Maschine sieht vor, dass die kombinierte Funktionseinheit aus Fahrwerk und Packereinheit höhenverstellbar zum Werkzeugrahmen des Gerätes angebracht ist.

Wahlweise kann die kombinierte Funktionseinheit aus Fahrwerk und Packereinheit an einem hinteren Ende des Gerätes angeordnet sein. Alternativ hierzu kann die kombinierte Funktionseinheit aus Fahrwerk und Packereinheit in Nähe des hinteren Endes des Gerätes angeordnet sein, wobei in Fahrtrichtung davor und/oder dahinter weitere Werkzeuge angeordnet sein können. Auch kann die Packereinheit verschiedene Packersysteme wie bspw. Einzelpacker und/oder Doppelpacker umfassen. Zudem kann die Maschine neben der kombinierten Funktionseinheit aus Fahrwerk und Packereinheit verschiedene Werkzeugkombinationen umfassen, die mit der Funktionseinheit kombiniert sind. Dies können bspw. zinken- und/oder scheibenartige Werkzeuge oder auch Säeinheiten beliebiger Bauart sein. Grundsätzlich sind vielfältige Kombinationen verschiedenster Elemente denkbar.

Die kombinierte Funktionseinheit aus Fahrwerk und Packereinheit kann auch ungefähr in der Mitte des Gerätes angeordnet sein, wobei das Fahrwerk in der ersten Betriebslage zu Transportzwecken dienen kann.

Es sei an dieser Stelle darauf hingewiesen, dass bei der Verwendung des Begriffes Fahrwerk, das gemeinsam mit der Packereinheit um die Schwenkachse verschwenkbar angeordnet sein kann, in der Regel der Teil des Fahrwerks gemeint ist, der nahe bei den Packerelementen angeordnet ist, d.h. normalerweise die hinteren Stützräder. Die für die Tiefeneinstellung unterstützend verwendbaren vorderen Stützräder werden dabei nicht mit verschwenkt, sondern können i.d.R. unabhängig von den hinteren Stützrädern in der Höhe verstellt werden. Wenn also im Zusammenhang der vorliegenden Anmeldung - Beschreibung und Ansprüche - von der funktional und/oder baulich gekoppelten Einheit von Fahrwerk und Packereinheit die Rede ist, so ist damit gleichermaßen eine Funktionseinheit von Packereinheit und damit baulich und funktional gekoppelten hinteren Stützrändern gemeint und umfasst.

Es sei weiter darauf hingewiesen, dass sich die erfindungsgemäße Packer-Fahrwerks-Funktionseinheit nicht über die gesamte Arbeitsbreite der Maschine erstrecken muss, sondern sich normalerweise nur über deren mittleren Bereich erstreckt. Optionale seitliche, anklappbare Rahmenausleger weisen keine Schwenkachsen und auch kein Fahrwerk auf. Da solche erfindungsgemäßen Bodenbearbeitungsmaschinen normalerweise sehr große Arbeitsbreiten aufweisen, können beidseitig des Maschinenrahmens jeweils klappbare Auslegerabschnitte vorgesehen sein, welche die Gesamtarbeitsbreite der Maschine deutlich vergrößern können. Die um horizontale Schwenkachsen, die parallel zur Fahrtrichtung angeordnet sind, klappbaren Auslegerabschnitte sind für eine Straßenfahrt vorzugsweise nach oben geschwenkt, so dass die Maschinenbreite auf das notwendige Maß für die Straßenfahrt reduziert ist. Für die Feldfahrt können diese Auslegerabschnitte nach unten geschwenkt werden, so dass die entsprechenden Rahmenabschnitte mit den daran angeordneten Werkzeugen wie bspw. Zinken, Scheiben und heckseitigen Packereinheiten aktiv sind. Für die Auslegerabschnitte sind keine separaten Stützräder erforderlich. Ebenso können für diese Abschnitte die klappbaren Einheiten aus Packereinheiten und hinteren Stützrädern entfallen.

Im Folgenden sollen Ausführungsbeispiele die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer Ausführungsform der Erfindung hervor, die als nicht einschränkendes Beispiel dient und auf die beigefügten Zeichnungen Bezug nimmt.
Fig. 1 zeigt eine schematische Seitenansicht einer Ausführungsvariante einer erfindungsgemäßen landwirtschaftlichen Bodenbearbeitungsmaschine, bei der sich ein Fahrwerk in einer ersten Betriebslage für eine Straßenfahrt befindet.
Fig. 2 zeigt eine schematische Seitenansicht der Maschine gemäß Fig. 1, bei der sich das Fahrwerk in einer zweiten Betriebslage für eine Feldfahrt befindet.
Fig. 3 zeigt eine schematische Perspektivdarstellung der

Bodenbearbeitungsmaschine mit angehobenem Fahrwerk und in Bodenkontakt befindlicher Packereinheit, die eine Vielzahl von scheibenartigen Packerelementen umfasst.

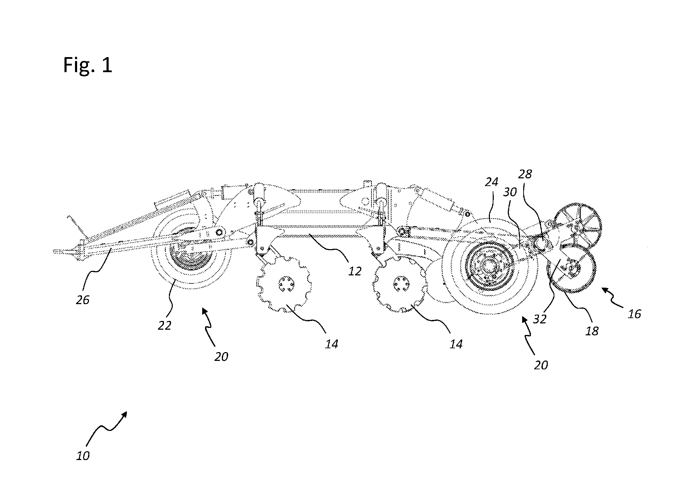

Für gleiche oder gleich wirkende Elemente der Erfindung werden in den Figuren 1 bis 3 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Maschine ausgestaltet sein kann und stellen keine abschließende Begrenzung dar.

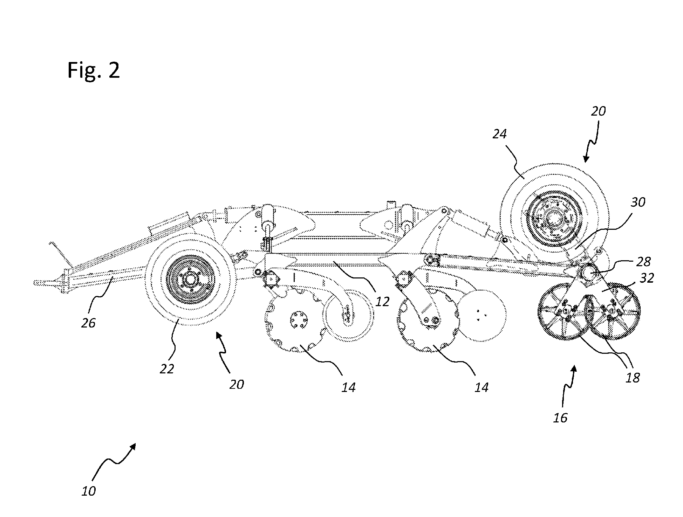

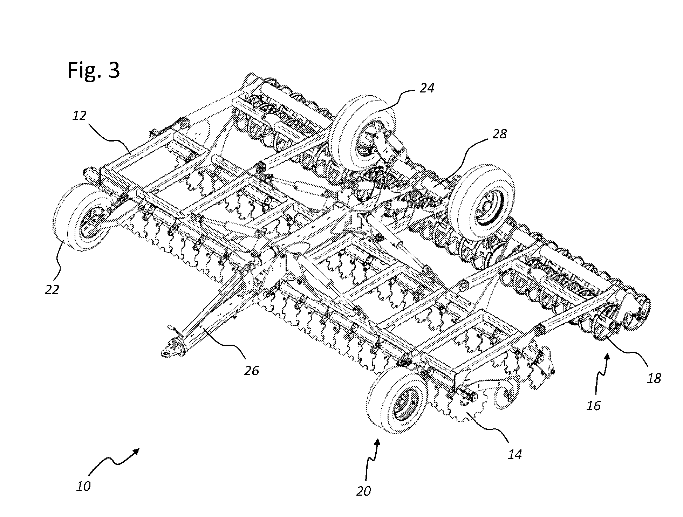

Anhand der schematischen Perspektivdarstellung der Fig. 3 und der schematischen Seitenansichten der Figuren 1 und 2 sollen der Aufbau und die grundsätzliche Funktionsweise eines Ausführungsbeispiels eines erfindungsgemäßen gezogenen landwirtschaftlichen Gerätes verdeutlicht werden. Das landwirtschaftliche Gerät wird durch ein Bodenbearbeitungsgerät 10 repräsentiert, das einen Rahmen 12 mit einer Mehrzahl daran angeordneter, ggf. verstellbarer Scheiben 14 sowie heckseitig eine oder mehrere Packereinheiten 16 aufweisen kann. Die Packereinheit 16 wird im gezeigten Ausführungsbeispiel durch eine Doppelreihe mit scheibenartigen Packerelementen 18 gebildet. Da das Bodenbearbeitungsgerät 10 von einer hier nicht dargestellten Zugmaschine gezogen wird, verfügt es über ein höhenverstellbares Fahrwerk 20 mit vorderen Stützräder 22 und hinteren Stützrädern 24. Während die vorderen Stützräder 22 in Zusammenwirkung mit den hinteren Packereinheiten 16 die Tiefenführung bei der Feldfahrt ermöglichen und zu diesem Zweck mechanisch oder hydraulisch in der Höhe verstellbar sein können, dienen die hinteren Räder 24 des Fahrwerks 20 dem Anheben des gesamten Geräts 10 für die Straßenfahrt (vgl. Fig. 1) oder dem Absenken für die Feldfahrt (vgl. Fig. 2), wobei sich die Maschine 10 heckseitig auf den Packerelementen 18 abstützt.

Die hinteren Räder 24 des Fahrwerks 20 sind höhenverstellbar am Rahmen 12 angeordnet und tragen das Bodenbearbeitungsgerät 10 zumindest in Straßenfahrt unter Wahrung eines ausreichenden Abstandes der Scheiben 14 von der Straßenoberfläche. Für die Feldfahrt können zumindest die hinteren Stützräder 24 verschwenkt und abgesenkt werden, so dass eine gewünschte Bodenbearbeitungstiefe durch entsprechendes Eintauchen der Scheiben 14 und heckseitigen Packerelemente 18 erreicht werden kann. Die hinteren Stützräder 24 bilden somit das eigentliche Fahrwerk 20, das für die Straßenfahrt unverzichtbar ist. Die vorderen Stützräder 22 sind dagegen nicht unverzichtbar, da das Bodenbearbeitungsgerät 10 prinzipiell auch als aufgesatteltes Gerät ausgebildet sein könnte, das sich über die Deichsel 26 am Zugfahrzeug abstützen könnte.

Wie die Figuren 1 und 2 erkennen lassen, wird das Fahrwerk 20 bei der Feldfahrt komplett eingezogen und nach oben geschwenkt, d.h. vom Boden abgehoben, so dass die Arbeitstiefe des Bodenbearbeitungsgeräts 10 ausschließlich über die höhenverstellbaren vorderen Stützräder 22 und die hinteren Packereinheiten 16 und deren Packerelemente 18 definiert wird. Je nach Ausstattung können sowohl die vorderen Stützräder 22 als auch die heckseitigen Packerelemente 18 hydraulisch oder mechanisch in der Höhe verstellbar sein. Die vorderen Stützräder 22 sind frontseitig am Rahmen 12 angeordnet, wo sich auch die Zugdeichsel 26 zur Ankoppelung an das Zugfahrzeug befindet. Die Zugdeichsel 26 ist gelenkig am Rahmen 12 angeordnet und kann bspw. um eine Querachse verschwenkt werden.

Die beiden Seitenansichten der Figuren 1 und 2 lassen die Funktionseinheit aus miteinander gekoppeltem Fahrwerk 20 und heckseitig am Gerät 10 angebauter Packereinheit 16 deutlich erkennen. Die hinteren Stützräder 24 und die Packereinheit 16 mit ihren in leicht versetzt zueinander angeordneten Doppelreihen von Packerelementen 18 weisen eine funktional und/oder baulich zusammenhängenden Schwenk- oder Bewegungsachse 28 auf, um die zumindest die hinteren Stützräder 24 des Fahrwerks 20 und die Packereinheit 16 zwischen ihrer ersten Betriebslage für eine Straßenfahrt (Fig. 1) und ihrer zweiten Betriebslage für eine Feldfahrt (Fig. 2) verschwenkbar sind. Die Funktionselemente Packereinheit 16 und Fahrwerk 20 bzw. hintere Stützräder 24 sind jeweils für sich fest zusammenhängend an der gemeinsamen Schwenkachse 28 drehbar gelagert, und zwar derart, dass durch Verschwenken dieser Funktionseinheit um diese Achse 28 entweder das Fahrwerk 20 oder des Packerelement 16 sich auf dem Untergrund abstützt. Zu diesem Zweck weist die kombinierte Funktionseinheit aus Fahrwerk 20 und Packereinheit 16 eine horizontale, am Geräterahmen 12 gelagerte und quer zur Fahrtrichtung ausgerichtete Schwenkachse 28 sowie daran angeordnete erste Auslegerarme 30 für die hinteren Stützräder 24 des Fahrwerks sowie zweite Auslegerarme 32 für die Packereinheit 16 auf. Wie die Figuren 1 bis 3 deutlich erkennen lassen, sind die zweiten Auslegerarme 32 gabelförmig gestaltet, um die hintereinander und versetzt zueinander angeordneten Tandemreihen von Packerelementen 18 aufnehmen zu können.

Die bauliche Einheit aus Schwenkachse 28 und Auslegerarmen 30 und 32 ist für sich starr ausgebildet und erstreckt sich über die gesamte Arbeitsbreite den mittleren Bereich der Maschine 10 und damit über einen Teil ihrer gesamten Arbeitsbreite, wobei da die gesamte mittlere Packereinheit 16 mit all ihren Packerelementen 18 gleichzeitig mit den beiden Stützrädern 24 zwischen den beiden Endlagen der Figuren 1 und 2 um die Achse 28 verschwenkt werden kann. Vorzugsweise sind diese beiden Endlagen verriegelbar.

Es sei an dieser Stelle darauf hingewiesen, dass die in der schematischen Perspektivdarstellung der Fig. 3 gezeigte Maschine 10 nur einen Teil einer kompletten Bodenbearbeitungsmaschine 10 zeigen kann, die beidseitig des Rahmens 12 jeweils klappbare Auslegerabschnitte (nicht dargestellt) aufweisen kann, welche die Gesamtarbeitsbreite der Maschine deutlich vergrößern können. Die um horizontale Schwenkachsen, die parallel zur Fahrtrichtung angeordnet sind, klappbaren Auslegerabschnitte sind für eine Straßenfahrt vorzugsweise nach oben geschwenkt, so dass die Maschinenbreite auf das notwendige Maß für die Straßenfahrt reduziert ist. Für die Feldfahrt können diese Auslegerabschnitte nach unten geschwenkt werden, so dass die entsprechenden Rahmenabschnitte mit den daran angeordneten Scheiben 14 und heckseitigen Packereinheiten 16 aktiv sind. Wenn auch die Scheiben 14 und Packerelemente 18 dieser beiden seitlich am Rahmen 12 (vgl. Fig. 3) angeordneten Auslegerabschnitte sinnvollerweise ungefähr parallel zu den in Fig. 3 gezeigten Scheiben 14 und Packerelementen 18 angeordnet sind, so sind jedoch für die Auslegerabschnitte normalerweise keine separaten Stützräder erforderlich. Ebenso können für diese Abschnitte die klappbaren Einheiten aus Packereinheiten 16 und hinteren Stützrädern 24 entfallen, wie sie in den Figuren 1 bis 3 in ihrem Aufbau und in ihrer Funktionsweise dargestellt sind.

Somit erstreckt sich die erfindungsgemäße Packer-Fahrwerks-Funktionseinheit nicht über die gesamte Arbeitsbreite der Maschine 10, sondern nur über deren mittleren Bereich, wie er in der Fig. 3 dargestellt ist. Die dort nicht gezeigten seitlichen, anklappbaren Rahmenausleger weisen keine Schwenkachsen 28 und auch kein Fahrwerk 20 auf.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Maschine, Bodenbearbeitungsgerät
- 12: Rahmen
- 14: Scheiben
- 16: Packereinheit
- 18: Packerelemente
- 20: Fahrwerk
- 22: vordere Stützräder
- 24: hintere Stützräder
- 26: Deichsel
- 28: Achse, Schwenkachse
- 30: erster Auslegerarm
- 32: zweite Auslegerarme

## Patentansprüche

1. Gezogene landwirtschaftliche Maschine (10) zur Bodenbearbeitung und/oder zum Ausbringen von Saatgut, mit einem Fahrwerk (20), Bodenbearbeitungswerkzeugen (14) und einer Packereinheit (16), die mit dem Fahrwerk (20) gekoppelt ist und mit diesem eine bauliche und/oder funktionale Einheit bildet, **dadurch gekennzeichnet, dass** in einer ersten Betriebslage das Fahrwerk (20) in eine aktive Lage für eine Straßenfahrt gebracht ist und die Packereinheit (16) außerhalb eines Eingriffsbereichs mit dem Boden gebracht ist, und dass in einer zweiten Betriebslage zumindest Teile des Fahrwerks (20) in eine inaktive Lage außerhalb eines Kontaktbereichs mit dem Boden gebracht sind und die Packereinheit (16) sich in einem aktiven Zustand im Eingriffsbereichs mit dem Boden befindet.

2. Maschine nach Anspruch 1, bei der das Fahrwerk (20) und die Packereinheit (16) eine kompakte Funktionseinheit mit einer gemeinsamen oder zumindest funktional und/oder baulich zusammenhängenden Schwenkachse (28) bilden, um die das Fahrwerk (20) und die Packereinheit (16) zwischen ihrer ersten Betriebslage für eine Straßenfahrt und ihrer zweiten Betriebslage für eine Feldfahrt verschwenkbar sind.

3. Maschine nach Anspruch 1 oder 2, bei der die kombinierte Funktionseinheit aus Fahrwerk (20) und Packereinheit (16) jeweils eine horizontale, an einem Geräterahmen (12) gelagerte und quer zur Fahrtrichtung ausgerichtete Schwenkachse (28) sowie daran angeordnete Auslegerarme (30, 32) für das Fahrwerk (20) bzw. die Packereinheit (16) aufweist, wobei die bauliche Einheit aus Schwenkachse (28) und Auslegerarmen (30, 32) für sich starr ausgebildet ist.

4. Maschine nach Anspruch 3, bei der den ersten und zweiten Betriebslagen jeweils verriegelbare Endlagen des Schwenkbereichs der Schwenkachse (28) mit daran angeordneten Auslegerarmen (30, 32) für das Fahrwerk (20) und die Packereinheit (16) zugeordnet sind.

5. Maschine nach einem der Ansprüche 1 bis 4, bei der die kombinierte Funktionseinheit aus Fahrwerk (20) und Packereinheit (16) an einem hinteren Ende des Gerätes (10) angeordnet ist.

6. Maschine nach einem der Ansprüche 1 bis 4, bei der die kombinierte Funktionseinheit aus Fahrwerk (20) und Packereinheit (16) in Nähe des hinteren Endes des Gerätes (10) angeordnet ist, wobei in Fahrtrichtung davor und/oder dahinter weitere Werkzeuge angeordnet sind.

7. Maschine nach einem der Ansprüche 1 bis 6, bei der die kombinierte Funktionseinheit aus Fahrwerk (20) und Packereinheit (16) verschiedene Packersysteme wie Einzelpacker und/oder Doppelpacker umfasst.

8. Maschine nach einem der Ansprüche 1 bis 7, bei der die kombinierte Funktionseinheit aus Fahrwerk (20) und Packereinheit (16) verschiedene Werkzeugkombinationen umfasst, die mit der Funktionseinheit kombiniert sind.

9. Maschine nach einem der Ansprüche 1 bis 8, bei der die kombinierte Funktionseinheit aus Fahrwerk (20) und Packereinheit (16) höhenverstellbar zum Werkzeugrahmen (12) des Gerätes (10) angebracht ist.

10. Maschine nach einem der Ansprüche 1 bis 9, bei der die kombinierte Funktionseinheit aus Fahrwerk (20) und Packereinheit (16) ungefähr in der Mitte das Gerätes (10) angeordnet ist und das Fahrwerk (20) in der ersten Betriebslage zu Transportzwecken dient.

11. Maschine nach einem der Ansprüche 1 bis 10, bei der sich die Funktionseinheit aus Fahrwerk (20) und Packereinheit (16) nicht über die gesamte Arbeitsbreite der Maschine (10) erstreckt, sondern nur über deren mittleren Bereich.

12. Maschine nach Anspruch 11, bei der zu beiden Seiten des Maschinenrahmens (12) seitliche, anklappbare Rahmenausleger angeordnet sind, die jeweils keine Schwenkachsen (28) und kein Fahrwerk (20) aufweisen.
